# EUROPÄISCHE PATENTANMELDUNG

(11) **EP 3 696 968 A1**
(43) Veröffentlichungstag der Anmeldung: **19.08.2020**
(21) Anmeldenummer: 19157725.3
(22) Anmeldetag: 18.02.2019
(51) Int. Cl.: H02P 27/08, F02M 37/08, H02P 7/29

(54) **ANSTEUERVERFAHREN UND ANSTEUEREINHEIT FÜR EINEN GLEICHSTROMPUMPENMOTOR**

(71) Anmelder: Baier + Köppel GmbH & Co. KG, 91257 Pegnitz (DE)
(72) Erfinder: KÖPPEL, Bernhard, 91257 Pegnitz (DE); REDEL, Andreas, 91275 Auerbach (DE)
(74) Vertreter: Zech, Stefan Markus

(57) **Zusammenfassung**

Die Erfindung betrifft ein Verfahren zum Ansteuern eines Gleichstrompumpenmotors (4), vorzugsweise eines bürstenbehafteten Gleichstrommotors zum Pumpen von Schmierstoff, der mit einem pulsweitenmodulierten (PWM-)Steuersignal angesteuert wird,
wobei in einem Erfassungsschritt aktuelle Parameter erfasst werden und anhand der erfassten Parameter in einem Anpassungsschritt ein Tastgrad (D) des PWM-Steuersignals (S_{PWM}) angepasst und/oder verändert wird, wobei die Erfassung aktueller Parameter mindestens die Erfassung einer aktuellen Eingangsspannung (U_{B}) umfasst.

## Beschreibung

Die Erfindung betrifft ein Ansteuerverfahren und eine Ansteuereinheit zum Ansteuern eines Gleichstrompumpenmotors, vorzugsweise eines bürstenbehafteten Gleichstrommotors zum Pumpen von Schmierstoff, sowie ein Pumpensystem, insbesondere zum Pumpen von Schmierstoffen, und ein Verfahren zur Kalibrierung der Ansteuereinheit.

Im Stand der Technik werden Gleichstrompumpenmotoren verwendet, um Schmierstoff aus einem Schmierstoffreservoir an eine gewünschte Schmierstelle oder an mehrere gewünschte Schmierstellen zu pumpen, an der/denen Schmierstoff benötigt wird. Schmierstoffpumpen finden in unterschiedlichen Gebieten Anwendung, beispielsweise werden sie zur Schmierung unterschiedlicher Schmierstellen in Lastkraftwagen (LKW), in Bau- oder Landmaschinen in technischen Anlagen oder Geräten im Bergbau sowie in Windkraftanlagen eingesetzt. In den unterschiedlichen Anwendungsgebieten sind typischerweise unterschiedliche Betriebsvoraussetzungen für den Gleichstrompumpenmotor sowie für die Ansteuereinheit vorzufinden, so dass eine große Auswahl an unterschiedlichen Pumpenmotoren und Ansteuereinheiten existiert, die jeweils individuell an die unterschiedlichen Betriebsvoraussetzungen angepasst sind oder angepasst werden müssen.

Herkömmlicherweise muss somit vor einer Inbetriebnahme eine genaue Auswahl getroffen werden, welche Komponenten des Systems kombiniert werden können, ohne dass die Komponenten Schaden nehmen oder gar zerstört werden. Beispielsweise muss typischerweise entschieden werden, welche elektrische Pumpenmotoren mit welcher Ansteuereinheit und mit welcher darauf implementierten Firmware betrieben werden können. Insbesondere weisen kostengünstige Gleichstrompumpenmotoren keine Drehzahlsensoren oder ggfs. lediglich günstige, eher ungenaue bzw. unzuverlässige, Drehzahlsensoren auf.

Darüber hinaus können sich während des Betriebs die Voraussetzungen für den Gleichstrompumpenmotor und somit auch für die Ansteuereinheit ändern, da sich beispielsweise durch unterschiedliche Außentemperaturen, die Viskosität des zu pumpenden Schmierstoffs ändern kann. Hierdurch ändert sich der Widerstand, gegen den die Schmierstoffpumpe arbeiten muss. Für den Gleichstrompumpenmotor verändert sich also das Drehmoment, das dieser für einen Pumpenhub aufbringen muss, wenn seine Drehzahl und damit die Anzahl der Pumpenhübe pro Zeit der Schmierstoffpumpe beibehalten werden soll. Eine sich verändernde Anzahl der Pumpenhübe pro Zeit führt darüber hinaus zu einem unruhigen Laufverhalten der Pumpe und darüber hinaus kann hierdurch nicht gewährleistet werden, dass die benötigte Menge an Schmierstoff tatsächlich auch die Schmierstellen erreicht.

Es ist daher Aufgabe der Erfindung, eine universell einsetzbare Ansteuereinheit bereitzustellen, die in der Lage ist, auch bei unterschiedlichen Betriebsvoraussetzungen, insbesondere bei unterschiedlichen Betriebsspannungen als Eingangsspannung, einen insbesondere möglichst kostengünstigen Gleichstrompumpenmotor anzusteuern.

Die Aufgabe wird beispielsweise durch ein Verfahren nach Anspruch 1, einer Ansteuereinheit nach Anspruch 11, einem Pumpensystem nach Anspruch 18, sowie einem Verfahren zur Kalibrierung nach Anspruch 19 gelöst.

Gemäß einem ersten Aspekt der Erfindung wird die Aufgabe insbesondere durch ein Verfahren zum Ansteuern eines Gleichstrompumpenmotors gelöst, vorzugsweise eines bürstenbehafteten Gleichstrommotors zum Pumpen von Schmierstoff, der mit einem pulsweitenmodulierten (PWM-)Steuersignal angesteuert wird, wobei in einem Erfassungsschritt aktuelle Parameter erfasst werden und anhand der erfassten Parameter in einem Anpassungsschritt ein Tastgrad des PWM-Steuersignals angepasst und/oder verändert wird, wobei die Erfassung aktueller Parameter mindestens die Erfassung einer aktuellen Eingangsspannung umfasst.

Ein wesentlicher Kern der Erfindung liegt darin, dass in einem Erfassungsschritt aktuelle Parameter, also insbesondere die Betriebsspannung, automatisiert erfasst werden. Durch das Erfassen der aktuellen Parameter und das Anpassen der Ansteuerung des Gleichstrompumpenmotors, wird es ermöglicht einen universell einsetzbaren Gleichstrompumpenmotor zusammen mit der erfindungsgemäßen Ansteuereinheit für unterschiedliche Anwendungsgebiete bereitzustellen, wobei diese bei unterschiedlichen Betriebsvoraussetzungen betrieben werden können. Die im Erfassungsschritt erfassten aktuellen Parameter dienen anschließend im Anpassungsschritt als Grundlage dafür, den Tastgrad des PWM-Steuersignals anzupassen und/oder zu verändern. Das PWM-Steuersignal dient dazu, den Gleichstrompumpenmotor mit einer Spannung anzusteuern, die für den Gleichstrompumpenmotor geeignet ist. Durch das Anpassen des Tastgrads des PWM-Steuersignals kann auch bei unterschiedlichen Eingangsspannungen ein Gleichstrompumpenmotorbetrieben werden, da durch Reduzieren des Tastgrads insgesamt, also nach einer Integration, die durch die Tiefpasswirkung der Motorspulen bedingt ist, eine niedrigere, effektive Spannung an dem Gleichstrompumpenmotor und bei einem erhöhen des Tastgrads folglich eine höhere, effektive Spannung an dem Gleichstrompumpenmotor anliegt.

Unter dem Tastgrad wird ein Verhältnis zwischen der Pulsweite tₑ und der Periodendauer T eines PWM-Signals, das beispielsweise periodisch wiederkehrende Rechteckimpulse aufweist. Die Pulsweite tₑ beschreibt (bildlich gesprochen) die Breite des Rechteckimpulses, also die Zeitdauer, die der Rechteckimpuls auf einem hohen Spannungswert geschaltet ist. Weitere Pulsformen sind ebenfalls möglich. Unter einem hohen Spannungswert wird in diesem Zusammenhang ein Spannungswert verstanden, der einen Wert von 8V bis 36V oder vorzugsweise von 10V bis 24V betragen kann. Die restliche Zeitdauer der Periodendauer T ist das PWM-Signal auf einen niedrigen Spannungswert, wobei unter einem niedrigen Spannungswert vorzugsweise eine Spannung von 0V verstanden wird.

Insbesondere umfasst die Erfassung aktueller Parameter weiterhin die Erfassung eines Motorstroms des Gleichstrompumpenmotors und/oder einer Außentemperatur, wodurch das Ansteuerverfahren auch unter variierende Betriebsbedingungen, wie beispielsweise schwankenden Außentemperaturen und/oder auch bei Gleichstrompumpenmotoren mit unterschiedlichen Charakteristiken verwendet werden kann.

Das Erfassen des Motorstroms ermöglicht es wiederkehrende Motorstrommuster zu erkennen. Die wiederkehrenden Motorstrommuster sind charakteristisch für einen Pumpenhub, wodurch es ermöglicht wird, anhand des Motorstroms darauf zu schließen, ob und wann ein Pumpenhub stattgefunden hat.

Insbesondere wird in dem Anpassungsschritt der Tastgrad der PWM-Steuersignale unabhängig von der Eingangsspannung angepasst, sofern die Eingangsspannung in dem Erfassungsschritt einen unteren Schwellwert unterschreitet. Vorzugsweise kann der unterer Schwellwert einen Wert, von 8V bis 15V oder insbesondere von 9V bis 12V, vorzugsweise genau 12V, betragen. Ein Tastgrad, der gleich Eins ist, bedeutet, dass das PWM-Signal über die gesamte Periodendauer T auf dem hohen Spannungswert geschaltet ist. Hierdurch können vergleichsweise niedrige Betriebsspannungen als Eingangsspannungen direkt verwenden bzw. an den Gleichstrompumpenmotor durchgeschaltet werden.

Vorzugsweise wird in dem Anpassungsschritt der Tastgrad des PWM-Steuersignals, vorzugsweise in jeder Betriebssituation, so angepasst wird, dass eine im Wesentlichen gleiche als konstant vorgegebene Umdrehungszahl des Gleichstrompumpenmotors erreicht wird. Hierdurch wird kein Drehzahlsensor benötigt, wodurch die Kosten weiter reduziert werden.

Vorzugsweise wird in dem Anpassungsschritt der Tastgrad des PWM-Steuersignals - vorzugsweise in jeder Betriebssituation - so angepasst, dass, vorzugsweise ohne Rückgriff auf Messwerte eines Drehzahlsensors, eine zumindest im Wesentlichen konstante Umdrehungszahl des Gleichstrommotors erreicht wird.

In einer weiterhin fakultativ möglichen Ausgestaltung kann die Umdrehungszahl des Gleichstrommotors auch anhand der Auswertung des Motorstroms (Iₘ) bestimmt werden. In beiden Alternativen, also bei völligem Verzicht auf das Erfassen einer aktuellen Umdrehungszahl des Motors als auch bei Berechnung der Drehzahl über den erfassten Motorstrom (virtueller Drehzahlsensor) kann folglich auf einen zusätzlichen Drehzahlsensor verzichtet werden. Hierdurch können auch vergleichsweise kostengünstige Gleichstrommotoren ohne Drehzahlsensoren derart angesteuert werden, dass diese auf eine konstante Umdrehungszahl geregelt werden.

Weiterhin ist es natürlich auch möglich, einen physischen separaten Drehzahlsensor vorzusehen. Insgesamt sieht die Erfindung insofern drei Alternativen vor, nämlich den kompletten Verzicht auf das Erfassen der Drehzahl bei gleichzeitiger Anpassung des Tastgrads (D) des PWM-Steuersignals zur Aufrechterhaltung einer vorgegebenen Drehzahl, das Vorsehen eines virtuellen Drehzahlsensors durch Erfassung von bestimmten Strommustern im Motorstrom (Iₘ) oder das Vorsehen eines physischen Drehzahlsensors.

Durch eine konstante Umdrehungszahl des elektrischen Motors wird ein stabiler und ruhiger Betrieb des Gleichstrommotors erreicht. Gleichzeitig wird eine zuverlässige Schmierstoffversorgung gewährleistet. Durch Einhaltung einer vorgegebenen Drehzahl kann auch das ausgebrachte Schmierstoffvolumen zu jeder Zeit exakt bestimmt werden.

Vorzugsweise kann der Erfassungsschritt ereignisgesteuert in unregelmäßigen Abständen und/oder in zyklischen Abständen erfolgen. Durch einen ereignisgesteuerten in unregelmäßigen Abständen erfolgenden Erfassungsschritt kann das Ansteuerverfahren insbesondere durch einen beispielsweise externen Auslöseimpuls ausgelöst werden, so dass auf bestimmte Ereignisse adaptiv reagiert werden kann. Durch einen in zyklischen Abständen erfolgenden Erfassungsschritt kann hingegen eine dauerhafte Erfassung der im Erfassungsschritt bestimmten Daten sichergestellt werden.

Insbesondere wird in dem Anpassungsschritt der Tastgrad nach einer vorbestimmten Formel in Abhängigkeit von der erfassten Eingangsspannung, sowie der ggf. erfassten Außentemperatur, sowie des ggf. erfassten Motorstroms des Gleichstrompumpenmotors auf einen Wert von Null bis Eins gesetzt, wobei die Werte Null und Eins insbesondere eingeschlossen sind. Dadurch kann der Tastgrad derart eingestellt werden, dass auch unter wechselnden Bedingungen die Motordrehzahl konstant bleibt und das hierfür benötigte Drehmoment aufgebracht werden kann.

Unter einer vorbestimmten Formel kann insbesondere auch ein Algorithmus und/oder ein Regelalgorithmus verstanden werden, der anhand der erfassten Eingangsspannung sowie der ggf. erfassten Außentemperatur, sowie des ggf. erfassten Motorstroms, den Tastgrad entsprechend einstellt und/oder den Tastgrad auf einem bestimmten Sollwert regelt. Insbesondere können hierbei verschiedene Schritte innerhalb einer Regelschleife zyklisch wiederholt und/oder ereignisgesteuert durchgeführt werden.

In einer weiteren fakultativ möglichen, aber keineswegs zwingenden Ausführungsform wird in dem Erfassungsschritt eine Umdrehungszahl des Gleichstrompumpenmotors durch einen Drehzahlsensor erfasst, und in dem Anpassungsschritt wird der Tastgrad der PWM-Steuersignale derart angepasst, dass eine zumindest im Wesentlichen konstante Umdrehungszahl des Gleichstrompumpenmotors erreicht wird. Durch eine konstante Umdrehungszahl des elektrischen Motors wird ein stabiler und ruhiger Betrieb des Gleichstrompumpenmotors erreicht.

Insbesondere wird, sofern das obiges Verfahren in einem Pumpenelement zum Pumpen von Schmierstoff aus einem Schmierstoffreservoir angewendet wird, eine Pumpmenge des Pumpenelements anhand eines Pumpenhubs und der im Wesentlichen konstanten Umdrehungszahl des Gleichstrompumpenmotors bestimmt. Insbesondere kann bei einer als konstant vorgegebenen Umdrehungszahl die Anzahl der Pumpenhübe über die Zeitdauer aufsummiert werden, in der die Pumpe betrieben wird, so dass eine Gesamtmenge (die Pumpmenge) des gepumpten Schmierstoffs berechnet werden kann.

Vorzugsweise wird ein Füllstand des Schmierstoffreservoirs anhand der Pumpmenge des Pumpenelements bestimmt, wodurch wiederrum berechnet werden kann, wie viel Schmierstoff aus dem Schmierstoffreservoir gepumpt wurde. Ein Füllstandsensor, der ansonsten in dem Schmierstoffreservoir vorhanden wäre, kann dadurch eingespart werden.

In einer konkreten Ausführungsform kann insbesondere die Eingangsspannung in einem Bereich zwischen 5V bis 37V oder vorzugsweise in einem Bereich zwischen 11V und 25V liegen. In dieser konkreten Ausführungsform kann beispielsweise eine Periodendauer T des PWM-Signals 10ms oder weniger (gleichbedeutend mit einer Frequenz von 100Hz oder mehr) betragen. Beispielsweise kann die Periodendauer auch in einem Bereich zwischen 10ms und 10µs liegt oder vorzugsweise bei 33,3µs (gleichbedeutend mit einer Frequenz von 30kHz) betragen. Insbesondere kann konkret der Erfassungsschritt mit einer Periodendauer T_{erf} im Bereich zwischen 10ms und 200ms, vorzugsweise mit einer Periodendauer T_{erf} von 100ms, periodisch durchgeführt werden.

Die oben genannte Aufgabe wird weiterhin gelöst durch eine Ansteuereinheit zum Ansteuern eines Gleichstrompumpenmotors, vorzugsweise eines bürstenbehafteten Gleichstrommotors, wobei die Ansteuereinheit insbesondere nach dem Verfahren nach der obigen Art angesteuert wird, und Folgendes aufweist:
- einen Gleichstrompumpenmotor, der insbesondere als ein bürstenbehafteter Gleichstrommotor ausgestaltet ist;
- ein oder mehrere Schaltelement/e; und
- eine Steuereinheit, die dazu ausgestaltet ist, das oder die Schaltelement/e in einen leitenden oder einen nichtleitenden Zustand zu schalten;
wobei die Ansteuereinheit ferner Parametererfassungseinheiten aufweist, die dazu ausgestaltet sind, aktuelle Parameter zu erfassen und wobei das oder die Schaltelement/e derart von der Steuereinheit geschaltet werden, dass der Gleichstrompumpenmotor mit einem pulsweitenmodulierten (PWM-) Steuersignal angesteuert wird,
wobei ein Tastgrad des PWM-Steuersignals anhand der erfassten aktuelle Parameter angepasst und/oder verändert wird.

Insbesondere weisen die Parametererfassungseinheiten mindestens einen Eingangsspannungssensor zum Erfassen einer Eingangsspannung sowie vorzugsweise einen oder mehrere der folgenden Sensoren auf:
- einen Motorstromsensor zum Erfassen eines Motorstroms des Gleichstrompumpenmotors; sowie vorzugsweise
- einen Außentemperatursensor zum Erfassen einer Außentemperatur,
wobei die aktuellen Parameter eine Eingangsspannung und den Motorstrom des Gleichstrompumpenmotors, sowie vorzugsweise eine Außentemperatur, umfassen.

Vorzugsweise weist die Ansteuereinheit ferner keinen Drehzahlsensor auf, wobei die Umdrehungszahl des Gleichstrompumpenmotors entweder steuerungstechnisch vorgegeben und durch Veränderung des Tastgrades des PWM-Steuersignals exakt eingehalten oder zusätzlich durch eine Erfassung des Motorstroms kontrolliert bzw. auf einen fest vorgegebenen Wert nachjustiert wird. Hierdurch wird kein Drehzahlsensor benötigt, wodurch die Kosten weiter reduziert werden. Insbesondere wird das PWM-Steuersignal derart angepasst, dass eine zumindest im Wesentlichen konstante Umdrehungszahl des Gleichstrompumpenmotors erreicht wird, und zwar dann, wenn überhaupt keine Drehzahlerfassung erfolgt oder auch dann, wenn die Drehzahl anhand der Auswertung des Motorstroms (virtueller Drehzahlsensor) erfasst wird oder auch dann, wenn die Werte eines physischen Drehzahlsensors erfasst werden. Durch eine konstante Umdrehungszahl des elektrischen Motors wird ein stabiler und ruhiger Betrieb des Gleichstrompumpenmotors erreicht. Gleichzeitig wird eine zuverlässige Versorgung der Schmierstellen mit Schmierstoff gewährleistet und die ausgebrachte Schmierstoffmenge kann anhand der Umdrehungszahlen, also der ausgeführten Pumpenhübe berechnet werden.

In einer weiteren, keineswegs zwingenden Ausführungsform weist die Ansteuereinheit ferner, wie bereits angesprochen, einen Drehzahlsensor auf, der die Umdrehungszahl des Gleichstrompumpenmotors erfasst, wobei die PWM-Steuersignale derart angepasst werden, dass eine zumindest im Wesentlichen konstante Umdrehungszahl des Gleichstrompumpenmotors erreicht wird. Dadurch wird ein stabiler und ruhiger Betrieb des elektrischen Motors erreicht. Die Umdrehungszahl des Gleichstrompumpenmotors kann z.B. über Hallsensoren bestimmt werden.

Insbesondere ist die Ansteuereinheit, sofern die Ansteuereinheit in einem Pumpenelement zum Pumpen von Schmierstoff aus einem Schmierstoffreservoir integriert ist, dazu ausgestaltet, eine Pumpmenge des Pumpenelements anhand eines Pumpenhubs und der im Wesentlichen konstanten Umdrehungszahl des Gleichstrompumpenmotors zu bestimmen. Hierdurch kann anhand des Pumpenhubs der Pumpe, wie bereits angesprochen, auf eine Pumpmenge des Pumpenelements geschlossen werden.

Vorzugsweise wird ein Füllstand des Schmierstoffreservoirs anhand der Pumpmenge des Pumpenelements bestimmt. Hierdurch kann wiederrum berechnet werden, wie viel Schmierstoff aus dem Schmierstoffreservoir gepumpt wurde, so dass hierdurch ein Füllstandsensor, der ansonsten in dem Schmierstoffreservoir vorhanden wäre, eingespart werden kann.

Obige Aufgabe wird des Weiteren durch ein Pumpensystem gelöst, insbesondere zum Pumpen von Schmierstoffen, Folgendes aufweisend:
- ein Pumpenelement, die mit einem Gleichstrompumpenmotor betrieben wird;
- einen Gleichstrompumpenmotor, der vorzugsweise als bürstenbehafteter Gleichstrommotor ausgestaltet ist;
- ein Schmierstoffreservoir, an das die Pumpe angeschlossen ist;
- eine Ansteuereinheit, insbesondere nach der obigen Art, zum Ansteuern des Pumpenmotors mit dem Ansteuerverfahren der obigen Art; sowie vorzugsweise
- eine Anzeige zum Anzeigen eines durch die Ansteuereinheit bestimmten Füllstands des Schmierstoffreservoirs.

Insbesondere wird obige Aufgabe weiterhin durch ein Verfahren zur Kalibrierung einer Ansteuereinheit nach obiger Art gelöst, vorzugsweise in einem obigen Pumpensystem, wobei initiale Parameter, wie eine hinterlegte Formel zur Bestimmung des Tastgrad des PWM- Steuersignals, sowie vorzugsweise einen Pumpenhubwert, herstellerseitig bereitgestellt werden, und wobei die initialen Parameter anhand von Testmessungen in mehreren Kalibrierungsschritten unter bestimmten Bedingungen kalibriert werden.

Vorzugsweise umfasst das Verfahren zur Kalibrierung folgende Kalibrierungsschritte:
- Beaufschlagen der Ansteuereinheit mit bestimmten Kalibrierungsspannungen;
- Ansteuern des Gleichstrompumpenmotors mit der Ansteuereinheit;
- Durchführen von Testmessungen, wobei eine Ist-Drehzahl unter einer vorbestimmten Last bestimmt wird;
- Vergleichen der Ist-Drehzahl mit einer Soll-Drehzahl, die unter der vorbestimmten Last erreicht werden soll und
- Anpassen der initialen Parameter, so dass Ist-Drehzahl und Soll-Drehzahl übereinstimmen.

Unter einer vorbestimmten Last kann das Pumpen eines Mittels mit einem bestimmten Verhalten (einer bestimmten Viskosität) verstanden werden. Die Kalibrierungsspannung kann beispielsweise im Bereich von 10V bis 20V, oder insbesondere zwischen 10V und 18V, oder vorzugsweise bei 12V liegen.

Weitere Ausführungsformen ergeben sich aus den Unteransprüchen.

Nachfolgend wird die Erfindung anhand von Ausführungsbeispielen beschrieben, die anhand der Figuren näher erläutert werden. Hierbei zeigt:
- Fig. 1: einen Schaltplan einer ersten Ausführungsform der erfindungsgemäßen Ansteuereinheit;
- Fig. 2A: einen Signalverlauf einer Ausführungsform der erfindungsgemäßen Ansteuereinheit;
- Fig. 2B: einen Signalverlauf einer weiteren Ausführungsform der erfindungsgemäßen Ansteuereinheit;
- Fig. 3: eine Schnittansicht eines erfindungsgemäßen Pumpensystems und
- Fig. 4: ein Ablaufdiagram der Schritte einer Ausführungsform des erfindungsgemäßen Verfahrens zum Ansteuern eines Gleichstrompumpenmotors.

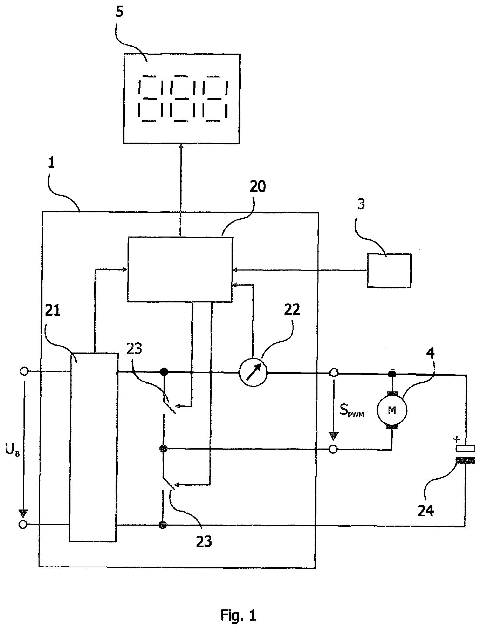

In Fig. 1 ist ein Schaltplan einer ersten Ausführungsform der erfindungsgemäßen Ansteuereinheit 1 abgebildet. Die Ansteuereinheit weist eine Steuereinheit 20 auf, die den Gleichstrompumpenmotor 4 mit einem PWM-Steuersignal SPWM ansteuert. Die Ansteuereinheit 1 weist in diesem Ausführungsbeispiel zwei Schaltelemente 23 auf, die in Reihe geschaltet sind und von der Steuereinheit 20 angesteuert werden. Die Schaltelemente 23 fungieren im Wesentlichen als Schalter und können beispielsweise als Bipolar-Transistor oder Metall-Oxid-Halbleiter-Feldeffekttransistoren (MOSFET) oder ggfs. auch als Bipolar-Transistor mit isoliertem Gate (IGBT) ausgeführt sein. Der Gleichstrompumpenmotor 4 wird mit einer Spannung u(t), die über dem oberen Schaltelement 23 anliegt, also dem PWM-Steuersignal S_{PWM} beaufschlagt. Außerdem wird der Motorstrom Iₘ mit dem Motorstromsensor 22 gemessen. Der gemessene Motorstrom Iₘ wird an die Steuereinheit 20 weitergegeben. Des Weiteren ist in Fig. 1 ein Glättungskondensator 24 mit einem Anschluss des Gleichstrompumpenmotor 4 (dem positiven Anschluss) und der Masse elektrisch verbunden, um das PWM-Steuersignal S_{PWM} zu glätten.

Darüber hinaus weist der in Fig. 1 abgebildete Schaltplan eine Eingangsspannungssensor 21 auf, an denen eine Eingangsspannung U_{B}, die auch als Betriebsspannung bezeichnet werden kann, angelegt wird. Die Eingangsspannungssensor 21 misst die angelegte Eingangsspannung U_{B} und sendet den gemessenen Wert der Eingangsspannung U_{B} an die Steuereinheit 20 weiter. Die Eingangsspannung U_{B} wird direkt (unverändert) an die Reihenschaltung der Schaltelemente 23 weitergegeben. Das abgebildete Ausführungsbeispiel ist als 2-Quadrantensteller implementiert, es ist allerdings ebenfalls möglich, dass die Ansteuereinheit 1 erfindungsgemäß als 1-Quadrantensteller (mit lediglich einem Schaltelement 23 und einer Diode anstelle des oberen Schaltelements 23) oder als 4-Quadrantensteller (mit insgesamt vier Schaltelementen 23, die zusammen mit dem Gleichstrompumpenmotor eine H-Brückenschaltung bilden) zu realisieren.

Ebenfalls ist es möglich, dass die Ansteuereinheit, bestehend aus der Steuereinheit 20, dem Eingangsspannungssensor 21, dem Motorstromsensor 22, den Schaltelementen 23, dem Glättungskondensator 24 und/oder dem Außentemperatursensor 3, insbesondere auf einer Platine realisiert ist.

Des Weiteren ist in Fig. 1 ein Außentemperatursensor 3 dargestellt. Der Außentemperatursensor 3 liefert einen Temperaturwert T_{A}, der direkt an die Steuereinheit 20 weitergegeben wird. Je nach Ausführungsbeispiel kann der Außentemperatursensor 3 an einem Gehäuse der Ansteuereinheit angebracht oder auch in dem Gehäuse integriert sein. Ebenfalls möglich wäre auch, dass der Außentemperatursensor 3 in einem Schmierstoffreservoir (nicht in Fig. 1 abgebildet) angeordnet ist, sofern dieses in dem Pumpensystem, in dem die Ansteuereinheit 1 integriert ist, vorhanden ist.

Die Ansteuereinheit 1 kann vorzugsweise einen Speicher (nicht abgebildet) aufweisen, auf den ggfs. initiale Parameter, wie die hinterlegte Formel zur Bestimmung des Tastgrads des PWM-Steuersignals, sowie vorzugsweise ein Pumpenhubwert oder unterschiedliche Routinen für bestimmte Betriebsmodi, abgespeichert werden können.

Darüber hinaus ist in Fig. 1 eine Anzeige 5 dargestellt, die es ermöglicht Informationen, die für den Betrieb der elektrischen Pumpe wichtig sind anzuzeigen. So können beispielsweise Informationen, die der Steuereinheit 20 vorliegen, auf der Anzeige 5 angezeigt werden. Diese Informationen können einerseits die aktuellen Parameter umfassen, wie die Eingangsspannung, den Motorstrom Iₘ, oder die Außentemperatur T_{A} oder andererseits auch zusätzliche Informationen umfassen, wie die Drehzahl des Gleichstrompumpenmotors, die Pumpmenge, der Pumpenhub, oder der Füllstand des Schmierstoffreservoirs. Ebenfalls denkbar wäre, dass die Anzeige 5 auch mehrere Informationen gleichzeitig anzeigen kann, um eine möglichst gute Übersichtlichkeit zu ermöglichen. Des Weiteren wäre es auch denkbar, dass eine Eingabeeinheit (nicht abgebildet) mit der Ansteuereinheit 1 kommunizieren kann (z.B. per Kabel oder drahtlos), so dass ggfs. initiale Parameter, wie die hinterlegte Formel zur Bestimmung des Tastgrads des PWM-Steuersignals, sowie vorzugsweise ein Pumpenhubwert, oder auch unterschiedliche Routinen für bestimmte Betriebsmodi, auf die Ansteuereinheit aufgespielt werden können.

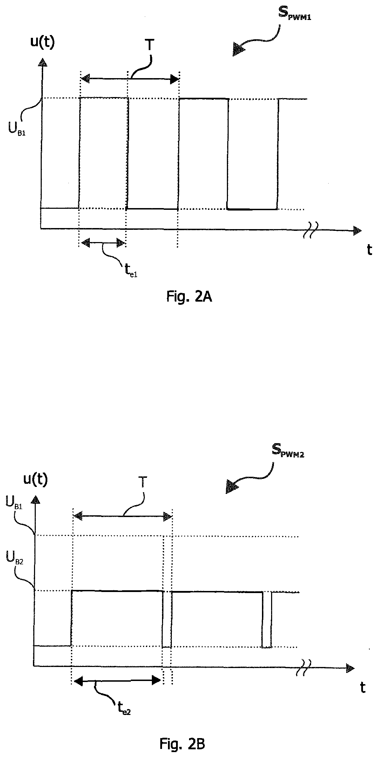

In Fig. 2A ist ein Signalverlauf eines PWM-Steuersignals S_{PWM} abgebildet. In Fig. 2A wird das zeitveränderliche Spannungssignal u(t) über der Zeit t gezeigt.

In diesem Ausführungsbeispiel wird eine Eingangsspannung U_{B1} gezeigt, die in die vorbestimmte Formel zur Anpassung des Tastgrads D des PWM-Steuersignals S_{PWM1} einfließt. Der Tastgrad D ist als Verhältnis von der Pulsweite tₑ₁ zur Periodendauer T des PWM-Steuersignals S_{PWM1} definiert. In Fig. 2A beträgt der Tastgrad D 0,5 (also 50%).

Fig. 2B zeigt einen weiteren Signalverlauf des PWM-Steuersignals SPWM2. In diesem Ausführungsbeispiel wird eine weitere Eingangsspannung U_{B2} gezeigt, die kleiner ist als die Eingangsspannung U_{B1} aus Fig. 2A. Die Eingangsspannung U_{B2} liegt unterhalb eines unteren Schwellwerts U_{Schw} (nicht abgebildet), wodurch der Tastgrad D unabhängig von der Eingangsspannung U_{B2} nach der vorbestimmten Formel zur Anpassung des Tastgrads D angepasst und/oder verändert wird. In Fig. 2B ist gezeigt, dass die Pulsweite tₑ₂ tendenziell weiter ist, als die Pulsweite tₑ₁, die anhand der vorbestimmten Formel und der ersten höheren Eingangsspannung U_{B1} ermittelt wurde. Die Periodendauer T des Tastgrads D ist hingegen unverändert. Der Tastgrad D, der in Fig. 2B abgebildet ist, ist ungefähr 0,9 (also 90%).

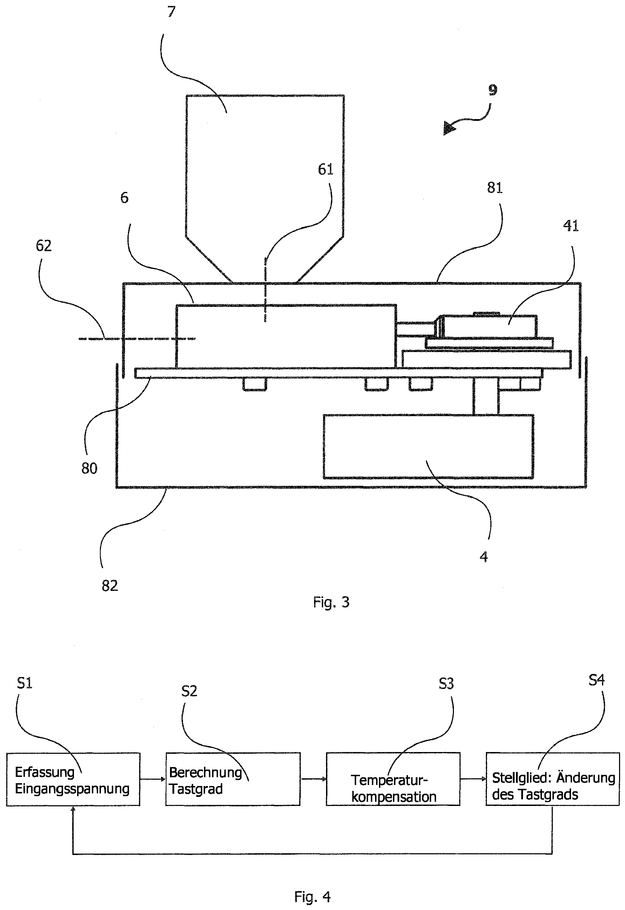

In Fig. 3 ist eine Schnittansicht einer typischen Schmierstoffpumpe, wie sie im Zusammenhang mit der vorliegenden Erfindung Anwendung findet, mit Gleichstrompumpenmotor 4 und integrierter Ansteuereinheit 1 zum Pumpen von Schmierstoff dargestellt.

Im Schmierstoffreservoir (7) ist eine vorbestimmte Menge an Schmierstoff, Schmierstoff bzw. Schmierfett untergebracht. Das Pumpenelement 6 steht in einem Ansaugbereich 61 in Fluidverbindung mit dem Schmierstoffreservoir 7, so dass Schmierstoff, Schmierstoff bzw. Schmierfett aus dem Schmierstoffreservoir angesaugt werden kann. Darüber hinaus ist der Druckausgang 62 des Pumpenelements 6 seitlich an dem Pumpenelement 6 schematisch dargestellt.

Des Weiteren ist in Fig. 3 eine Exzentereinheit 41 abgebildet, die durch den Gleichstrompumpenmotor 4 angetrieben wird. Die Exzentereinheit 41 wandelt die (rotatorische) Drehbewegung des Gleichstrompumpenmotors 4 in eine (translatorische) Pumpbewegung um und gibt die Pumpbewegung an das Pumpenelement 6 weiter. Das Pumpenelement 6, die Exzentereinheit 41 und der Gleichstrompumpenmotor 4 sind an einer Grundplatte 80 montiert und in einem Gehäuse 81 mit einem Deckel 82 aufgenommen.

In Fig. 4 ist ein Ablaufdiagram eines Ausführungsbeispiels des Verfahrens zum Ansteuern eines Gleichstrompumpenmotors als eine Regelstrecke dargestellt. Die Regelstrecke umfasst die Schritte S1, S2, S3 und S4, wobei in diesem Ausführungsbespiel die Schritte S1 bis S4 zyklisch wiederholt werden.

In einem konkreten Ausführungsbeispiel können die Schritte S1 bis S4 zyklischen insbesondere alle 50ms bis 200ms wiederholt werden. Vorzugsweise werden die Schritte S1 bis S4 alle 100ms wiederholt.

In Fig. 4 wird in Schritt S1 die Eingangsspannung der erfindungsgemäßen Ansteuereinheit erfasst. Darauf folgt Schritt S2, in welchem der Tastgrad D insbesondere anhand einer hinterlegten Formel und/oder ermittelter Kalibrierungswerten aus der Fertigung berechnet wird. In dem darauffolgenden Schritt S3 erfolgt nun anhand der ggf. erfassten Temperatur eine Temperaturkompensation. In Schritt S4 wird nun der Tastgrad D geändert und insbesondere an die Steuereinheit (20) ausgegeben.

### Bezugszeichenliste

- 1: Ansteuereinheit;
- 20: Steuereinheit;
- 21: Eingangsspannungssensor;
- 22: Motorstromsensor;
- 23: Schaltelemente;
- 24: Glättungskondensator;
- 3: Außentemperatursensor;
- 4: Gleichstrompumpenmotor (bürstenbehafteter Gleichstrommotor);
- 41: Exzentereinheit;
- 5: Anzeige;
- 6: Pumpenelement;
- 61: Ansaugbereich;
- 62: Druckausgang;
- 7: Schmierstoffreservoir;
- 80: Grundplatte;
- 81: Gehäuse;
- 82: Deckel;
- D: Tastgrad;
- Iₘ: Motorstrom;
- S1, S2, S3, S4: Verfahrensschritte der Regelstrecke;
- S_{PWM}: PWM-Steuersignal;
- S_{PWM1}, S_{PWM2}: angepasstes PWM-Steuersignal;
- t: Zeit;
- T_{A}: Außentemperatur (Temperatur);
- tₑ₁, tₑ₂: Pulsweite;
- T: Periodendauer des PWM-Signals;
- U_{b}, U_{b1}, U_{b2},: Eingangsspannung (Betriebsspannung);
- u(t): zeitveränderliches Spannungssignal;

## Patentansprüche

1. Verfahren zum Ansteuern eines Gleichstrompumpenmotors (4), vorzugsweise eines bürstenbehafteten Gleichstrommotors zum Pumpen von Schmierstoff, der mit einem pulsweitenmodulierten (PWM-)Steuersignal angesteuert wird,
wobei in einem Erfassungsschritt aktuelle Parameter erfasst werden und anhand der erfassten Parameter in einem Anpassungsschritt ein Tastgrad (D) des PWM-Steuersignals (S_{PWM}) angepasst und/oder verändert wird, wobei die Erfassung aktueller Parameter mindestens die Erfassung einer aktuellen Eingangsspannung (U_{B}) umfasst.

2. Verfahren nach Anspruch 1,
wobei die Erfassung aktueller Parameter weiterhin die Erfassung eines Motorstroms (Iₘ) des Gleichstrompumpenmotors (4) und/oder einer Außentemperatur (T_{A}) umfassen.

3. Verfahren nach einem der vorherigen Ansprüche,
wobei in dem Anpassungsschritt der Tastgrad (D) des PWM-Steuersignals unabhängig von der Eingangsspannung (U_{B}) angepasst wird, sofern die in dem Erfassungsschritt erfasste Eingangsspannung (U_{B}) einen unteren Schwellwert (U_{Schw}) unterschreitet.

4. Verfahren nach einem der vorherigen Ansprüche,
wobei in dem Anpassungsschritt der Tastgrad (D) des PWM-Steuersignals, vorzugsweise in jeder Betriebssituation, so angepasst wird, dass eine im Wesentlichen gleiche als konstant vorgegebene Umdrehungszahl (U_{N}) des Gleichstrompumpenmotors (4) erreicht wird.

5. Verfahren nach Anspruch 4,
**dadurch gekennzeichnet, dass** die Anpassung des Tastgrades (D) des PWM-Steuersignals zur Erzielung einer zumindest im Wesentlichen konstanten Umdrehungszahl ohne Rückgriff auf die Messwerte eines Drehzahlsensors vorgenommen wird.

6. Verfahren nach einem der vorherigen Ansprüche,
wobei der Erfassungsschritt ereignisgesteuert in unregelmäßigen Abständen und/oder in zyklischen Abständen erfolgen kann.

7. Verfahren nach einem der vorherigen Ansprüche,
wobei in dem Anpassungsschritt der Tastgrad (D) nach einer vorbestimmten Formel in Abhängigkeit von der erfassten Eingangsspannung (U_{B}), sowie der ggf. erfassten Außentemperatur (T_{A}), sowie des ggf. erfassten Motorstroms (Iₘ) des Gleichstrompumpenmotors (4) auf einen Wert von Null bis Eins gesetzt wird, wobei die Werte Null und Eins insbesondere eingeschlossen sind.

8. Verfahren nach einem der vorherigen Ansprüche,
wobei in dem Erfassungsschritt eine Umdrehungszahl (n) des Gleichstrompumpenmotors (4) durch einen Drehzahlsensor (6) erfasst wird, und
wobei in dem Anpassungsschritt der Tastgrad (D) des PWM-Steuersignals (S_{PWM}) derart angepasst wird, dass eine zumindest im Wesentlichen konstante Umdrehungszahl des Gleichstrompumpenmotors (4) erreicht wird.

9. Verfahren nach einem der vorherigen Ansprüche, insbesondere nach Anspruch 8,
wobei, sofern das Verfahren in einem Pumpenelement zum Pumpen von Schmierstoff aus einem Schmierstoffreservoir angewendet wird, eine Pumpmenge des Pumpenelements anhand eines Pumpenhubs und der im Wesentlichen konstanten Umdrehungszahl des Gleichstrompumpenmotors (4) bestimmt wird.

10. Verfahren nach einem der vorherigen Ansprüche, insbesondere nach Anspruch 9,
wobei ein Füllstand des Schmierstoffreservoirs anhand der Pumpmenge des Pumpenelements bestimmt wird.

11. Ansteuereinheit (1) zum Ansteuern eines Gleichstrompumpenmotors (4), vorzugsweise eines bürstenbehafteten Gleichstrommotors, wobei die Ansteuereinheit (1) insbesondere nach dem Verfahren nach einem der Ansprüche 1 bis 10 angesteuert wird, und Folgendes aufweist:
- einen Gleichstrompumpenmotor (4), der insbesondere als ein bürstenbehafteten Gleichstrommotorausgestaltet ist;
- ein oder mehrere Schaltelement/e (23); und
- eine Steuereinheit (20), die dazu ausgestaltet ist, das oder die Schaltelement/e (23) in einen leitenden oder einen nichtleitenden Zustand zu schalten;
wobei die Ansteuereinheit (1) ferner Parametererfassungseinheiten (21, 22, 3) aufweist, die dazu ausgestaltet sind, aktuelle Parameter zu erfassen und wobei das oder die Schaltelement/e (23) derart von der Steuereinheit (20) geschaltet werden, dass der Gleichstrompumpenmotor (4) mit einem pulsweitenmodulierten (PWM-) Steuersignal (S_{PWM}) angesteuert wird, wobei ein Tastgrad (D) des PWM-Steuersignals (S_{PWM}) anhand der erfassten aktuelle Parameter angepasst und/oder verändert wird.

12. Ansteuereinheit (1) nach Anspruch 11,
wobei die Parametererfassungseinheiten (21, 22, 3) mindestens einen Eingangsspannungssensor (21) zum Erfassen einer Eingangsspannung sowie vorzugsweise einen oder mehrere der folgenden Sensoren aufweisen:
- einen Motorstromsensor (22) zum Erfassen eines Motorstroms des Gleichstrompumpenmotors (4) ; sowie vorzugsweise
- einen Außentemperatursensor (5) zum Erfassen einer Außentemperatur,
wobei die aktuellen Parameter eine Eingangsspannung (U_{B}) und den Motorstrom (Iₘ) des Gleichstrompumpenmotors, sowie vorzugsweise eine Außentemperatur (T_{A}), umfassen.

13. Ansteuereinheit (1) nach einem der Ansprüche 11 oder 12,
wobei das PWM-Steuersignal (S_{PWM}) in Abhängigkeit einer oder mehrerer durch die Parametererfassungseinheiten (21, 22) erfassten Parametern, vorzugsweise ohne Rückgriff auf Messwerte eines Drehzahlsensors derart angepasst wird, dass eine zumindest im Wesentlichen konstante Umdrehungszahl des Gleichstrompumpenmotors (4) erreicht wird.

14. Ansteuereinheit (1) nach einem der Ansprüche 11 bis 13,
die ferner keinen Drehzahlsensor aufweist bzw. mit keinem Drehzahlsensor zusammenwirkt.

15. Ansteuereinheit (1) nach einem der Ansprüche 11 oder 14,
die ferner einen Drehzahlsensor aufweist, der die Umdrehungszahl des Gleichstrompumpenmotors (4) erfasst,
wobei das PWM-Steuersignal (S_{PWM}) derart angepasst werden, dass eine zumindest im Wesentlichen konstante Umdrehungszahl des Gleichstrompumpenmotors (4) erreicht wird.

16. Ansteuereinheit (1) nach einem der Ansprüche 11 bis 15,
wobei die Ansteuereinheit (1), sofern die Ansteuereinheit (1) in einem Pumpenelement (6) zum Pumpen von Schmierstoff aus einem Schmierstoffreservoir (7) integriert ist, dazu ausgestaltet ist, eine Pumpmenge des Pumpenelements (6) anhand eines Pumpenhubs und der im Wesentlichen konstanten Umdrehungszahl des Gleichstrompumpenmotors (4) bestimmt wird.

17. Ansteuereinheit (1) nach einem der Ansprüche 9 bis 12, insbesondere nach Anspruch 12,
wobei ein Füllstand des Schmierstoffreservoirs (7) anhand der Pumpmenge des Pumpenelements (6) bestimmt wird.

18. Pumpensystem (9), insbesondere zum Pumpen von Schmierstoffen, Folgendes aufweisend:
- ein Pumpenelement (6), die mit einem Gleichstrompumpenmotor (4) betrieben wird;
- den Gleichstrompumpenmotor (4), der vorzugsweise als bürstenbehafteten Gleichstrommotor ausgestaltet ist;
- ein Schmierstoffreservoir (7), an das das Pumpenelement (6) angeschlossen ist;
- eine Ansteuereinheit (1), insbesondere nach einem der Ansprüche 11 bis 17, zum Ansteuern des Gleichstrompumpenmotors (4) mit dem Ansteuerverfahren nach einem der Ansprüche 1 bis 10; sowie vorzugsweise
- eine Anzeige (7) zum Anzeigen eines durch die Ansteuereinheit (1) bestimmten Füllstands des Schmierstoffreservoirs.

19. Verfahren zur Kalibrierung einer Ansteuereinheit (1) nach einem der Ansprüche 11 bis 17, vorzugsweise in einem Pumpensystem (9) nach Anspruch 18,
wobei initiale Parameter, wie eine hinterlegte Formel zur Bestimmung des Tastgrad (D) des PWM- Steuersignals (S_{PWM}), sowie vorzugsweise einen Pumpenhubwert, herstellerseitig bereitgestellt werden, und wobei die initialen Parameter anhand von Testmessungen in mehreren Kalibrierungsschritten unter bestimmten Bedingungen kalibriert werden.

20. Verfahren nach Anspruch 19,
folgende Kalibrierungsschritte umfassend:
- Beaufschlagen der Ansteuereinheit (1) mit bestimmten Kalibrierungsspannungen;
- Ansteuern des Gleichstrompumpenmotors (4) mit der Ansteuereinheit (1);
- Durchführen von Testmessungen, wobei eine Ist-Drehzahl unter einer vorbestimmten Last bestimmt wird;
- Vergleichen der Ist-Drehzahl mit einer Soll-Drehzahl, die unter der vorbestimmten Last erreicht werden soll und
- Anpassen der initialen Parameter, so dass Ist-Drehzahl und Soll-Drehzahl übereinstimmen.
